# EUROPEAN PATENT APPLICATION

(11) **EP 3 955 536 A1**
(43) Date of publication of application: **16.02.2022**
(21) Application number: 20000281.4
(22) Date of filing: 10.08.2020
(51) Int. Cl.: H04L 29/06, H04W 12/02

(54) **SYSTEM AND METHOD FOR PROTECTING CONFIDENTIAL DATA IN ELECTRONIC CORRESPONDENCE**

(71) Applicant: S.C. CITYDOCK SRL, 014333 Mun. Bucuresti (RO)
(72) Inventor: Musat, Marian, Prahova (RO)

(57) **Abstract**

System and method for protecting confidential data in electronic correspondence, where the protection method according to the invention implies an automatic detection stage of confidential words, based on a database which the user fills in in advance with the confidential data, such as proper names, company names, commercial information; in the next stage, this data is replaced with position markers, the system automatically detecting all numbers of any nature and replacing them with position markers, while the extracted data, associated with the corresponding position markers, will be sent via a separate communication channel (GSM/GPRS), whereas the core file, containing only elements not identified as confidential, is sent via Ethernet.

The protection method is based on an algorithm and is implemented by means of an autonomous electronic device that can be attached or integrated into any computation system, which executes the retrieval of certain data from a file and its replacement with position markers. After the two files are sent via different channels, they are received and, by means of a different recipient's receiver device, using the installed algorithm, the core file will be able to be recreated. For additional protection, the files can be encrypted.

## Description

The invention relates to a system and a method for protecting confidential data in electronic correspondence, when electronic files are being sent via any method.

It is a known fact that economic espionage operates from the level of state structures to the level of large companies, each attempting to obtain advance knowledge, such as details regarding commercial transactions, research programs and/or key people involved in them. Encryption systems have experienced a striking development, but their evolution has been accompanied by the evolution of corresponding decryption systems. However, the implementation of encryption/decryption systems implies the existence of an appropriate technological capability, such as highly powerful servers, specialized computer software, specialized personnel, all of which being very expensive and out of reach for small companies who are also targeted by cyber-attacks.

In the field of protecting such data, document US2003182435 presents a method and a portable device which protects words or pictographs intended to be secured, the extracted data together with the data remaining after extraction being separated and stored on storage media in a central unit, with their subsequent total or partial reconstruction being possible only in the presence of a security clearance. Document RO132172 presents a method and an on line large data encryption, transmission, storage and reading system, which consists in creating images from pixels, the encryption and subsequent decryption of data being performed with a color image whose pixels are generated based on the stored numerical and alphanumerical values, acting as an encryption key.

Document RO 133066 presents an electronic correspondence transmission system, consisting of a network of terminals connected to a central computer, terminals through which the electronic correspondence is delivered directly to the recipient via the Internet, in the electronic mailbox, and stored in a data center, the user selecting the form of correspondence transmission by accessing a communication platform hosted by the central computer, and being sent a mailing code.

The technical problem solved by this invention consists in protecting the confidential data contained in electronic correspondence, the confidential information contained in the files sent via computer network protocols based on frame transmission and used in implementing local LAN (Ethernet) type networks.

The system and method for protecting confidential data in electronic correspondence, according to the invention, solves the proposed technical problem in that the protection method, according to the invention, proposes an automatic detection stage of confidential words, based on a database filled in by the user in advance with confidential data, such as proper names, company names, commercial information. In the next stage, this data is replaced with position markers, the system automatically detecting all numbers of any nature and replacing them with position markers. The extracted data, associated with the corresponding position markers, is transmitted via a separate communication channel (GSN/GPRS), while the core file, containing only elements not identified as confidential, is sent via Ethernet, the method object of this invention being applied by means of an autonomous electronic device, that can be attached to desktop or laptop-type computer systems, either by insertion into one of the free slots of the motherboard, or by connection to one of the external USB input/output ports, autonomous device that will execute the analysis of transmitted text or image-type files. For images, the first step is to apply image processing algorithms, e.g. changing the bits' value, blurring the image, identifying shapes, etc., followed by the extraction of parts of the image or certain information from the image considered sensitive, according to a mutually agreed algorithm between the transmitter and the receiver, between the people using this type of device. It automatically detects certain data from that file, previously identified as confidential, to which it assigns position markers in the text and replaces it with these position markers, while the data which the owner intends to identify as confidential will be able to be identified by the user directly in the text or it can be entered into a library, thus providing flexibility to the application. Apart from this data predetermined by the owner of the application, in text files, the device will perform an automatic tagging and elimination of all numbers and words beginning with capital letters, thus ensuring that confidential information is eliminated from the transmitted texts.

The autonomous device which ensures the execution of the process is composed of a processor that executes the confidential data extraction algorithm, a volatile RAM-type memory circuit (random access memory) and a non-volatile ROM (read only memory) memory, necessary for the operation of the microprocessor; a flash-type memory circuit where the user inputs the words deemed confidential; a SIM card and a microcontroller through which the confidential data file is sent via the GSM/GPRS channel and the USB and I2C connection systems.

The invention comes with the following advantages:
- The possibility of securing the files sent via Ethernet.
- The possibility of automatically eliminating confidential data in a file that is to be sent via Ethernet.
- The use of substantially less resources compared with classical encryption methods.
- The device can be easily interfaced with any computation system and does not require purchasing specialized software licenses.
- The potential subjective errors in analyzing the content of the file that is to be sent are eliminated.
- The use of a parallel communication channel (GSM/GPRS).

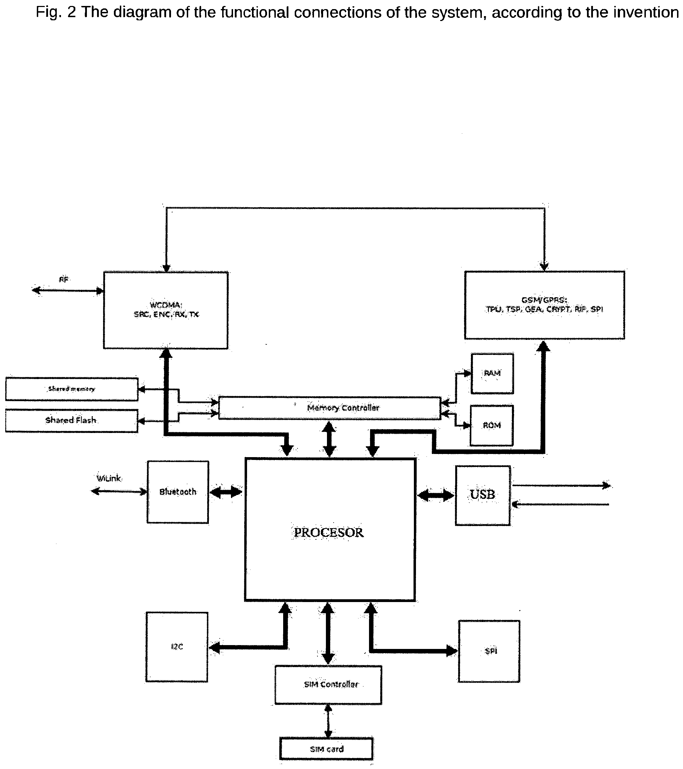

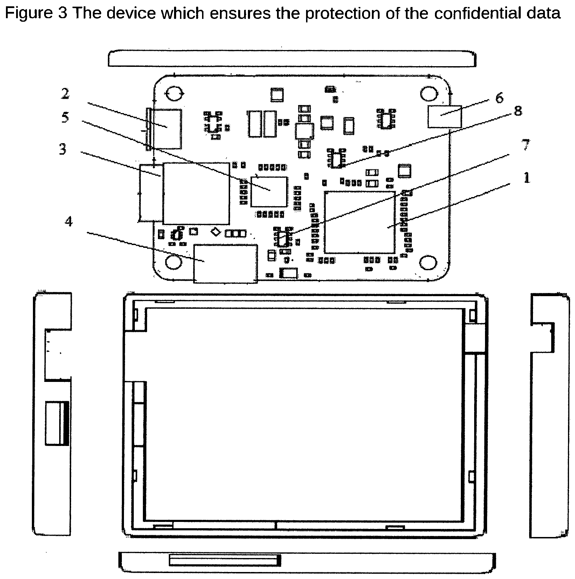

Next, we present an example of embodiment of the invention in connection with figures 1-3, which represent:
Fig. 1 The logical algorithm of the automatic electronic device
Fig. 2 The diagram of the functional connections of the system, according to the invention
Fig. 3 The device which ensures the protection of the confidential data.

The method for protecting confidential data in electronic correspondence, either text or image, consists in automatically detecting confidential words at the user's discretion, based on a database which the user fills in in advance with confidential data (such as proper names, company names, commercial information). The next step consists of replacing this data with position markers. The system will automatically detect all numbers, of any nature, and replace them with position markers. The extracted data, associated with the corresponding position markers, will be sent via a separate communication channel (GSM/GPRS), while the core file, containing only the elements that are not identified as confidential, can be sent via Ethernet.

Two files are generated by the processing of the file: (i) a "sanitized" first file - in which confidential data is replaced with position markers, and (ii) an "encrypted" second file, which contains the extracted data, associated with the position markers. The "sanitized" file will be sent to the recipient via the classic communication channel of computer network protocols, while the file containing the confidential data will be sent to the module attached to the recipient's computation device via a different communication channel, type Global System for Mobile Communications (GSM/GPRS). By extracting the confidential information and by separating the two files which are sent via different communication channels, the transmission is completely secured. In order to recompose the initial file, the device places the data from the second file, the "encrypted" one, in the first, "sanitized" file, based on a special placement algorithm, by using position markers. The security of the transmission is ensured, primarily by the low probability of both files to be intercepted, and, secondly, by the impossibility of associating the two files, as a file sent via Ethernet cannot be associated with a file sent via GSM/GPRS, and, thirdly, by the impossibility of placing the data in the "encrypted" file in the "sanitized" file without the device's algorithm.

The core file can be received by the recipient without the confidential elements, but it will have no relevance without the data sent via the GSM/GPRS channel. With the aid of the recipient's autonomous electronic receiver device, using an installed algorithm, the core file will be able to be recreated. For additional protection, the files can be encrypted.

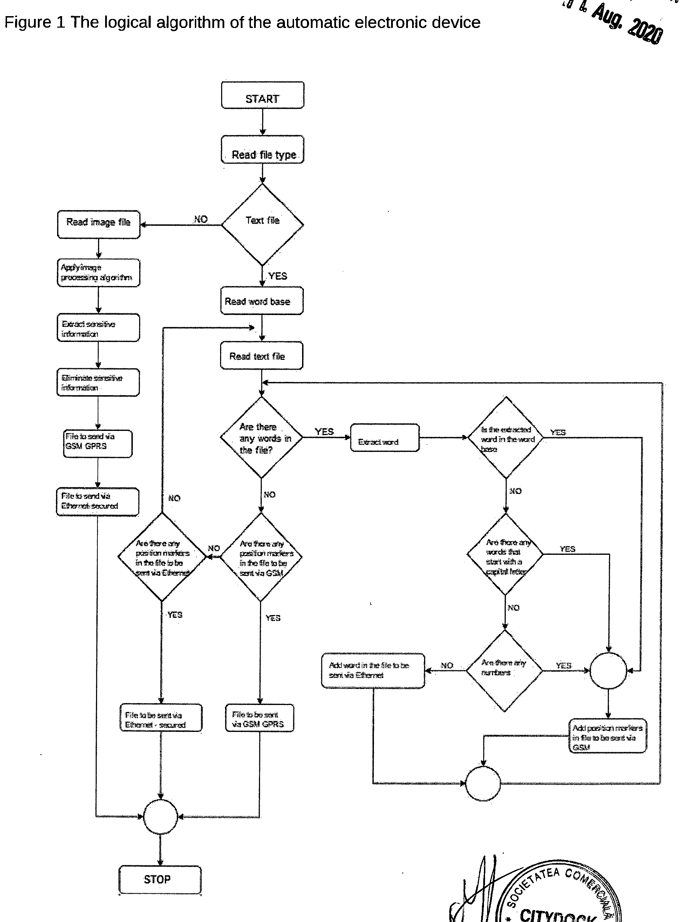

The autonomous electronic device ensuring the protection of confidential data in the files is composed of a processor **1** which executes the confidential data extraction algorithm presented in figure 1; a volatile memory circuit **7** type RAM (random access memory) and a non-volatile memory **8** type ROM (read-only memory), necessary for the operation of the microprocessor; a flash-type memory circuit **3** where the user inputs the words deemed confidential; a SIM card **4** and a microcontroller (**5**) through which the confidential data file is sent via the GSM/GPRS channel and the USB **2** and I2C **6** connection systems.

Through the USB connector **2**, the device can be connected to any desktop, laptop, tablet, and executes the confidential data extraction and transmission algorithm via a different communication channel (GSM/GPRS), independently from the body of the message sent via Ethernet.

Through the flash-type memory **3**, the user is free to personally determine and load a file containing the words deemed confidential, words which are extracted from the text and sent via a different communication channel.

## Claims

1. Method for protecting confidential data in electronic correspondence **characterized in that**, in a text or image-type file, certain confidential data will be automatically detected based on a database which the user fills in in advance with the confidential data, such as proper names, company names, commercial information, followed by the stage wherein this detected confidential data is replaced with position markers, thus generating two files, one which will contain position markers instead of the extracted confidential data and which will be sent via a separate communication channel (GSM/GPRS), while a second core file, containing only the non-confidential elements, is sent via Ethernet, the recipient receiving the two files sent via the two communication channels, where, with the use of an algorithm, will recreate the core file, the processing of the files, both on the user side and on the recipient side, being executed by an autonomous electronic device.

2. Autonomous confidential data protection electronic device, **characterized in that**, it is composed of a processor (**1**) that executes the confidential data extraction algorithm; a volatile RAM-type (random access memory) memory circuit (**7**) and a non-volatile ROM (read only memory) memory (**8**), necessary for the operation of the microprocessor; a flash-type memory circuit (**3**) where the user inputs the words deemed confidential; a SIM card (**4**) and a microcontroller (**5**) through which the confidential data file is sent via the GSM/GPRS channel and the USB (**2**) and I2C (**6**) connection systems.

3. System for protecting the confidential data in electronic correspondence, **characterized in that**, through the USB connector (**2**), the autonomous device can be connected to any desktop, laptop, tablet, **and** executes the confidential data extraction and transmission algorithm via a different communication channel (GSM/GPRS), independently from the body of the message sent via Ethernet.

4. System for protecting the confidential data in electronic correspondence according to claim 3, **characterized in that**, by means of the flash-type memory (**3**), the user is free to personally determine and load a file containing the words deemed confidential, words which are extracted from the text and sent via a different communication channel.

## Amended claims

### Amended claims in accordance with Rule 137(2) EPC.

1. Method of protection of confidential data in electronic mail **characterized in that,**
- in the first stage the sender completes a database **B** with certain confidential data such as own names, company names, commercial information;
- there is an identification in a basic file **F0** of type text or image, of some confidential data, which are found in the database **B** previously filled in by the sender;
- extracting confidential data from the basic **F0** file of text or image type, creating a sanitized file;
- the next stage consists in replacing the detected and extracted confidential data with **M** position markers, creating the **F1** file, which contains the **M** position markers but also non-confidential elements, the replacement being made with a first autonomous **D** device, based on an algorithm to extract confidential data;
- creating the **F2** encoded file containing the detected and extracted confidential data;
- the next step is to send the two files separately to the recipient, the file encoded **F2** via (GSM / GPRS), and the file **F1** with the included markers is transmitted via Ethernet,
- the recipient receives the two files **F1** and **F2** transmitted through the two communication channels;
- the recipient recreates the base file **F0** by processing the two received files **F1** and **F2**, using the second autonomous device **D** based on a reconstitution algorithm, which places the data from the encoded file **F2** in the first file **F1**, replacing the markers **M** with confidential data.

2. Autonomous electronic device for the protection of confidential data, **characterized in that** it is composed of a microprocessor (**1**) in which the algorithm for extracting confidential data and the reconstitution algorithm are executed; a random access memory (**7**) RAM circuit and a read only memory (**8**) ROM (**8**) ROM required for microprocessor operation; a flash memory circuit (**3**) in which the sender enters the data considered confidential; a SIM card (**4**) and a microcontroller (**5**) through which the confidential **F2** file is transmitted over the GSM / GPRS channel and the USB connection systems (**2**) and the I2C data transmission interface (**6**), which can be connected to any desktop, laptop, tablet.
